# EUROPEAN PATENT APPLICATION

(11) **EP 3 018 404 A1**
(43) Date of publication of application: **11.05.2016**
(21) Application number: 15186327.1
(22) Date of filing: 20.03.2011
(51) Int. Cl.: F21V 14/06, F21Y 115/10

(54) **LENS SYSTEM FOR AN LED LUMINAIRE**

(30) Priority: 22.03.2010 US 316335 P
(62) Divisional of application: 11720623.5
(71) Applicant: Robe Lighting, Inc, Sunrise, FL 33325 (US)
(72) Inventor: Jurik, Pavel, Austin, TX Texas 78720 (US); Valchar, Josef, Austin, TX Texas 78720 (US)
(74) Representative: Käck, Stefan

(57) **Abstract**

The present invention generally relates to an automated luminaire, specifically to an optical system for a luminaire utilizing an LED light source. The automated luminaire comprises an array of reflector (34) mounted LED light sources (30). The LEDs have a primary optics lens element (32) and generate a light beam, with a directional axis (49), which is directed toward an achromatic zoom lenslet array comprised two lenslet elements (46, 47) which are movably mounted to move in a path generally parallel with the LED axis (49) and a lens element which is fixed in position relative to the LED source.

## Description

### RELATED APPLICATION

This application is a utility filing claiming priority of US provisional application 61/316,335 filed on 22 March 2010.

### TECHNICAL FIELD OF THE INVENTION

The present invention generally relates to an automated luminaire, specifically to an optical system for a luminaire utilizing an LED light source.

### BACKGROUND OF THE INVENTION

Luminaires with automated and remotely controllable functionality are well known in the entertainment and architectural lighting markets. Such products are commonly used in theatres, television studios, concerts, theme parks, night clubs and other venues. A typical product will typically provide control over the pan and tilt functions of the luminaire allowing the operator to control the direction the luminaire is pointing and thus the position of the light beam on the stage or in the studio. This position control is often done via control of the luminaire's position in two orthogonal rotational axes usually referred to as pan and tilt. Many products provide control over other parameters such as the intensity, color, focus, beam size, beam shape and beam pattern. Additionally it is becoming common to utilize high power LEDs as the light source in such luminaires and, for color control, it is common to use an array of LEDs of different colors. For example a common configuration is to use a mix of Red, Green and Blue LEDs. This configuration allows the user to create the color they desire by mixing appropriate levels of the three colors. For example illuminating the Red and Green LEDs while leaving the Blue extinguished will result in an output that appears Yellow. Similarly Red and Blue will result in Magenta and Blue and Green will result in Cyan. By judicious control of the LED controls the user may achieve any color they desire within the color gamut set by the LED colors in the array. More than three colors may also be used and it is well known to add an Amber or White LED to the Red, Green and Blue to enhance the color mixing and improve the gamut of colors available. The products manufactured by Robe Show Lighting such as the REDWash 3.192 are typical of the art.

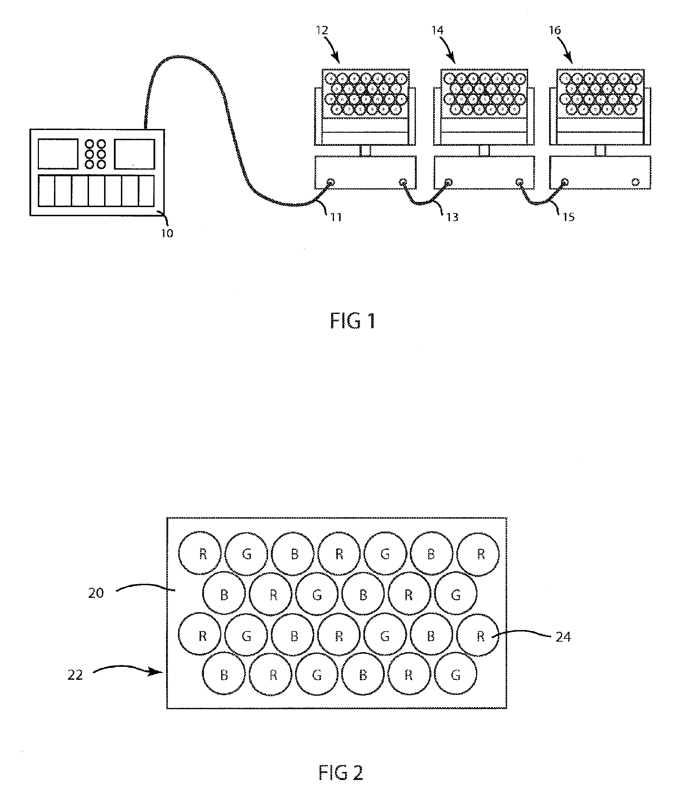

**Figure 1** illustrates a typical multiparameter automated LED luminaire system. These systems commonly include a plurality of multiparameter automated luminaires **12, 14, 16** which typically each contain on-board an array of LEDs, and electric motors coupled to mechanical drives systems and control electronics (not shown). In addition to being connected to mains power either directly or through a power distribution system (not shown), each luminaire is connected is series or in parallel to data link **11, 13 ,15** to one or more control desks **10.** The luminaire system is typically controlled by an operator through the control desk **10.** Consequently to effect this control both the control desk **10** and the individual luminaires typically include electronic circuitry as part of the electromechanical control system for controlling the automated lighting parameters.

**Figure 2** illustrates the output panel of a prior art LED automated luminaire **22.** A panel **20** contains an array of LEDs **24** which emit light. In the case illustrated the LEDs **24** are in three colors, red (R), green (G) and blue (B). Each of the LED emitters **24** may emit light at a fixed beam angle. In further prior art devices each LED emitter **24** is fitted with an output optical system which allows changes in beam angle of the output. These systems are both limited in their zoom range and suffer from chromatic aberration in the optical systems such that the final size of the beams of each color are different. For example, the beam from the red LEDs may be larger than that from the blue resulting in a red halo around the edge of the combined beam.

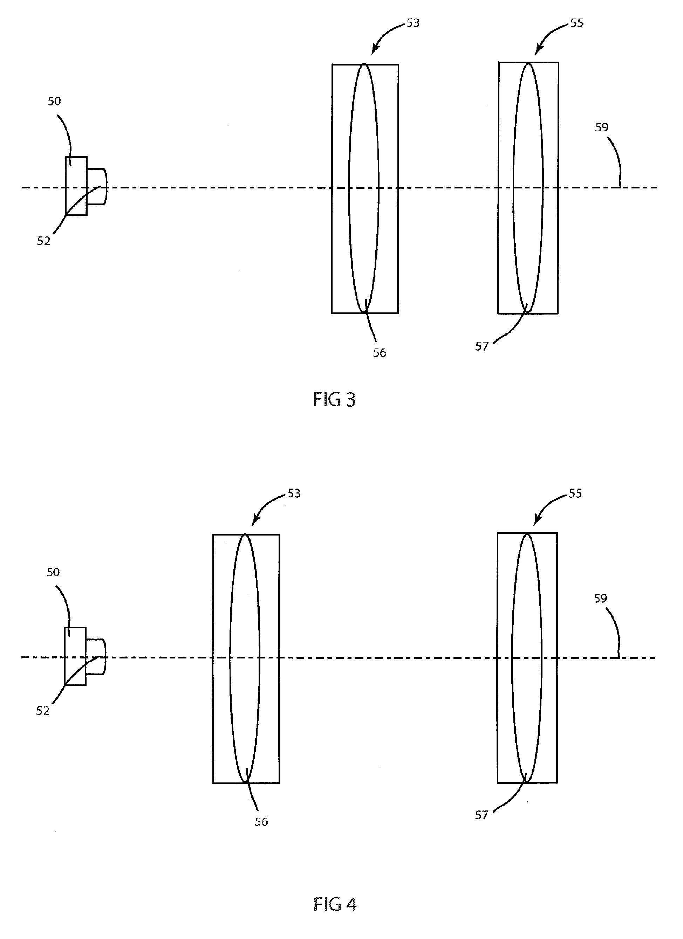

**Figures 3** and **4** illustrate an optical system used in the prior art to provide a variable beam angle or zoom to an automated LED luminaire. Each LED **50** which may be fitted with a primary optic **52** has an associated pair of lenses **53** and **55.** Lenses **53** and **55** may be separate lenses or each part of an array of lenses covering the entire LED array. Lenses **53** and **55** may each comprise a single optical element **56** and **57** respectively. In operation at least one of lens **53** or lens **55** is stationary with respect to LED **50** while the other may move along optical axis **59**. In the example illustrated in **Figures 3** and **Figure 4** lens **55** is fixed relative to LED **50** while lens **53** is able to move along optical axis **59**. **Figure 3** shows lens **53** in a first position and **Figure 4** shows lens **53** in a second position closer to LED **50.** This varying relative position between LED **50**, lens **53** and lens **55** provides a beam angle or zoom to the light beam from LED **50**.

There is a need for an optical zoom system for an LED automated luminaire with improved zoom range and reduced chromatic aberration.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
**FIGURE 1** illustrates a typical automated LED lighting system;
**FIGURE 2** illustrates the front panel of an LED luminaire system;
**FIGURE 3** illustrates optical components of a prior art LED luminaire;
**FIGURE 4** illustrates optical components of a prior art LED luminaire;
**FIGURE 5** illustrates optical components of an embodiment of the disclosed LED luminaire;
**FIGURE 6** illustrates optical components of an embodiment of the disclosed LED luminaire;
**FIGURE 7** illustrates the front panel of an embodiment of the disclosed LED luminaire;
**FIGURE 8** illustrates an embodiment of the optical components illustrated in **Figure 5** and **Figure 6****;** and
**FIGURE 9** illustrates an alternative embodiment of the optical component illustrated in **Figure 5** and **Figure 6****.**

### DETAILED DESCRIPTION OF THE INVENTION

Preferred embodiments of the present invention are illustrated in the FIGUREs, like numerals being used to refer to like and corresponding parts of the various drawings.

The present invention generally relates to an automated luminaire, specifically to an optical system for a luminaire utilizing an LED light source.

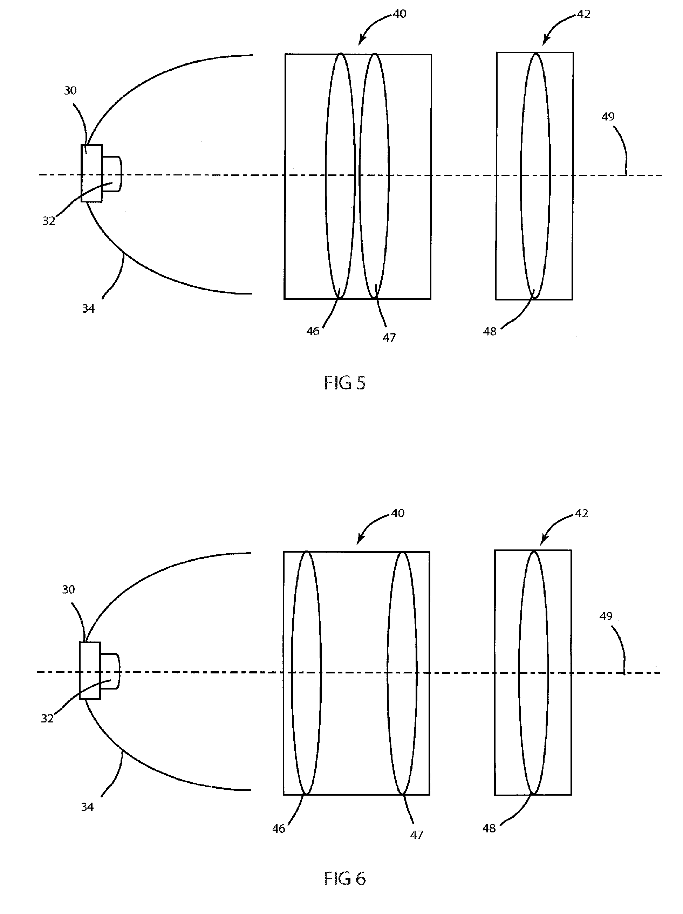

**Figures 5** and **6** illustrate an optical system used in an embodiment of the invention to provide an improved variable beam angle or zoom to an automated LED luminaire. Each LED **50** which may be fitted with a primary optic **32** may be mounted within an elliptical reflector **34**. Reflector **34** serves to collect light from LED **30** and direct it towards lens system **40** and lens system **42**. Lens system **40** contains two or more optical elements **46** and **47**. After passing through lens system **40** the light will pass through fixed output lens **42**. Output lens **42** may contain one or more optical elements **48**. Optical elements **46, 47** and **48** are illustrated herein as bi-convex lenses however the invention is not so limited and elements **46, 47** and **48** may be any optical element as well known in the art.

In operation output lens system **42** is fixed in position along optical axis **49** relative to LED **30** while either one or a plurality of optical elements **46** and **47** contained in lens system **40** may be free to move along optical axis **49** relative to LED **30** and output lens system **42**. Optical elements **46** and **47** are chosen such that varying their position along optical axis **49** in conjunction with fixed output lens provides a beam angle or zoom to the light beam from LED **30**. **Figure 5** shows lens elements **46** and **47** in first positions and **Figure 6** shows lens elements **46** and **47** in second positions relative to LED **30**. The positions of lens elements **46** and **47** in **Figure 6** relative to each other and to fixed LED **30** and fixed output lens **42** provides a beam angle or zoom that differs from that provided by the positions of lens elements **46** and **47** in **Figure 5**.

The optical properties of lens elements **46, 47** and **48** may be chosen such that the combined optical path is achromatic and provides the same degree of beam angle change to long wavelength, red, light as it does to short wavelength, blue, light and thus avoids chromatic aberration. This ensures that the beam from the red LEDs, green LEDs and blue LEDs are all the same size resulting in a uniformly colored combined beam.

Although the figures illustrate three colors of LEDs, red, green, and blue, the invention is not so limited and any number of colors of LEDs may be used without departing from the spirit of the invention. For example a system may use five different color LEDs such as red, green blue, amber and white or any combination thereof.

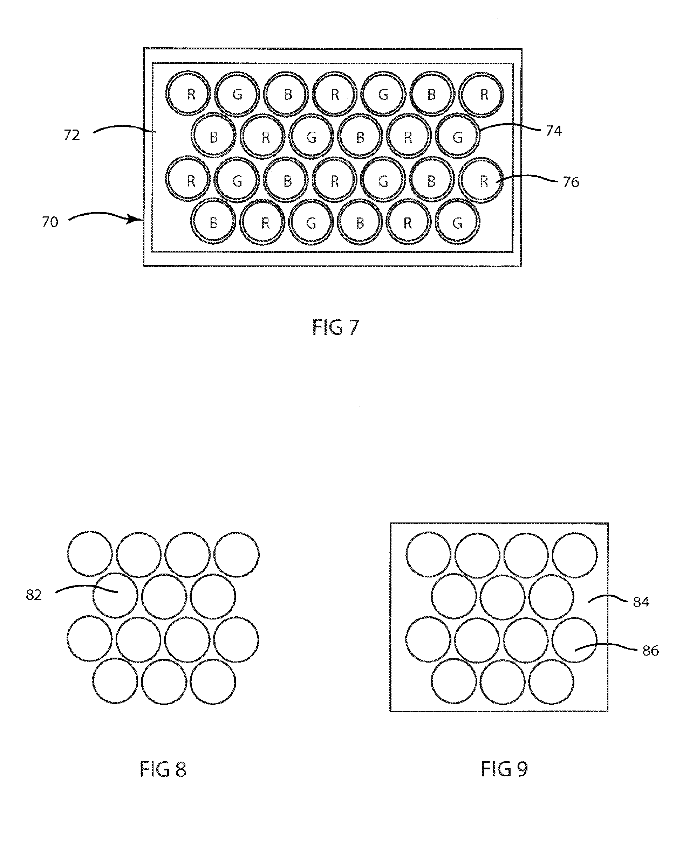

**Figure 7** illustrates the output panel **72** of an embodiment **70** of the invention. LEDs **74** each have an individual associated optical system **76** comprising lenses as described above in Figures 5 and 6. These lens systems may comprise individual lens elements **82** as shown in **Figure 8** or may be an array of lenses **86** molded in a single sheet **84** as illustrated in **Figure 9**. Although the arrays of LEDs **74** and lenses **86** are illustrated as rectangular the invention is not so limited and the arrays may be any shape including but not limited to round, square, rectangular, and hexagonal. Although the figures shown here are of an embodiment with wash optics the invention is not so limited and the light output from the optical system may be imaging where a focused or defocused image is projected, or non-imaging where a diffuse soft edged light beam is produced, without detracting from the spirit of the invention. The invention may be used as a beam angle control system with optical systems commonly known as spot, wash, beam or other optical systems known in the art.

Particular aspects of the subject-matter disclosed herein are set out in the following numbered clauses:
1. An automated luminaire comprising: a plurality of LED light sources where the LEDs have a primary optics lens element and are mounted in a reflector thereby generating a light beam, with a directional axis, which is directed toward a Captured by a second lens element which is movably mounted the move in a path generally parallel with the LED axis and a third lens element which is also movably mounted to move in a path generally parallel with the LED axis and a fourth lens element with if fixed relative to the LED source. Where the second, third and fourth lens form a zooming function whereby the angle of the light beam can be varied by moving the second and/or third Lens elements.
2. The automated luminaire of clause 1 where the second third and fourth lenses form achromatic lens which generally varies the beam angle of the light equivalently regardless of its wavelength within the visible range.
3. The automated luminaire of clause 1 where the lens element(s) are formed of more than one lens.
4. The automatic luminaire of clause 1 wherein one of the lens elements is biconvex.
5. The automatic luminaire of clause 4 wherein two of the lens elements are biconvex.
6. The automatic luminaire of clause 5 where three of the lens elements are biconvex.
7. An automated luminaire comprising: a plurality of LED light sources where the LEDs have a primary optics lens element and are mounted in a reflector thereby generating a light beam, with a directional axis, which is directed toward an achromatic zoom lens array comprised two lens elements which are movably mounted to move in a path generally parallel with the LED axis and a lens element which is fixed in position relative to the LED source.
8. The automated luminaire of clause 7 where the two movable lens elements are mounted between the LED source and the fixed lens element.
9. The automated luminaire of clause 8 wherein a lens element is comprised of a plurality of lenses.

While the disclosure has been described with respect to a limited number of embodiments, those skilled in the art, having benefit of this disclosure, will appreciate that other embodiments may be devised which do not depart from the scope of the disclosure as disclosed herein. The disclosure has been described in detail, it should be understood that various changes, substitutions and alterations can be made hereto without departing from the scope of the disclosure.

## Claims

1. An automated luminaire comprising:
a plurality of LED light sources (30, 74), wherein the LED light sources (30, 74) have a primary optics lens element (32) and are mounted in a reflector (34) thereby generating a light beam, with a directional axis (49), which is directed toward an achromatic zoom lens array comprising two lens elements (46, 47) which are movably mounted to move in a path generally parallel with the axis (49) and a lens element (48) which is fixed in position relative to the LED light sources (30, 74).

2. The automated luminaire of claim 1, wherein the two movable lens elements (46, 47) are mounted between the LED light sources (30, 74) and the fixed lens element (48).

3. The automated luminaire of claim 1 or 2, wherein one of the lens elements (46, 47, 48) is comprised of more than one lens.

4. The automated luminaire of claim 1, 2 or 3, wherein the two movable lens elements (46, 47) and the fixed lens element (48) are configured to form a zooming function whereby the angle of the light beam can be varied by moving the two movable lens elements (46, 47).

5. The automated luminaire of any of the preceding claims, wherein the achromatic zoom lens array is configured to generally vary the angle of the light beam equivalently regardless of its wavelength within the visible range.

6. The automatic luminaire of any of the preceding claims, wherein one of the lens elements (46, 47, 48) is biconvex.

7. The automatic luminaire of claim 6, wherein two of the lens elements (46, 47, 48) are biconvex.

8. The automatic luminaire of claim 7, wherein three of the lens elements (46, 47, 48) are biconvex.

9. The automatic luminaire of any of the preceding claims, wherein each of the plurality of LED light sources (30, 74) has an individual associated optical system comprising the primary optics lens element (32), the two movable lens elements (46, 47), and the fixed lens element (48).

10. The automatic luminaire of claim 9, wherein the optical system is an array of lenses (86) molded in a single sheet (84).
